# EUROPEAN PATENT SPECIFICATION

(11) **EP 1 592 522 B1**
(45) Date of publication and mention of the grant of the patent: **21.06.2006**
(21) Application number: 04707939.7
(22) Date of filing: 04.02.2004
(51) Int. Cl.: B05D 1/02, B05B 7/02, B05B 17/04, B05D 3/06

(54) **SPRAY GUN AND PROCESS FOR APPLICATION OF ACTINIC RADIATION-CURABLE COATING**
SPRITZPISTOLE UND VERFAHREN ZUM AUFBRINGEN EINER DURCHAKTINISCHE STRAHLUNG HÄRTBAREN BESCHICHTUNG
PISTOLET DE PULVERISATION ET PROCEDE D'APPLICATION D'UN REVETEMENT DURCISSABLE PAR RAYONNEMENT ACTINIQUE

(30) Priority: 06.02.2003 EP 03075361; 13.03.2003 US 454493 P
(43) Date of publication of application: 09.11.2005
(73) Proprietor: Akzo Nobel Coatings International BV, 6824 BM Arnhem (NL)
(72) Inventor: KLINKENBERG, Huig, NL-2224 DD Katwijk (ZH) (NL); MARINUS, Edward, NL-2317 WT Leiden (NL); JONKER, Josef, Pancratius, Maria, NL-2171 RE Sassenheim (NL); DE GRAAF, Daniel, NL-1218 EG Hilversum (NL)
(74) Representative: Schalkwijk, Pieter Cornelis
(86) International application number: PCT/EP2004/001165
(87) International publication number: WO 2004/069427

(56) References cited:
- EP-A- 0 808 670
- EP-A- 1 002 587
- DE-A- 10 048 355
- US-A- 4 788 108
- PATENT ABSTRACTS OF JAPAN vol. 018, no. 313 (C-1212), 15 June 1994 (1994-06-15) & JP 06 065523 A (TOYOTA MOTOR CORP), 8 March 1994 (1994-03-08)

## Description

The current invention relates to a spray gun for application of a coating having a spray nozzle and at least one actinic radiation outlet, and to a process of applying a coating composition which is at least partly curable by actinic radiation.

European Patent Application EP-A 1 002 587 discloses a UV light-assisted spray gun for paint application provided with one or more UV point sources located just next to the spray nozzle. The coating composition is irradiated immediately before or after leaving the spray gun. Cross-linking of a UV curable coating composition is initiated only right next to the spray nozzle. This requires an induction period between the initiation by UV light and the actual onset of the cross-linking reaction.
This requirement undesirably limits the choice of radiation-curable coating compositions which can be applied with this spray gun. Because irradiation only occurs right next to the spray nozzle, the balance of flow of the coating material just after application and the drying speed will be affected negatively. This can detract from the appearance of top coats and from the adhesion of primers.
Additionally, on the surface of the radiation outlet inside the spray gun there may be deposited a layer of cross-linked coating material which increases in thickness during operation. Said deposition limits the dose of radiation which remains available for initiation of the curing reaction. Ultimately, the deposition of cross-linked coating material inside the spray gun can lead to blocking. Also, blocking of the spray nozzle can occur if cross-linked material is formed and left in the spray gun. When the spraying process is interrupted, already irradiated coating material remains in the spray nozzle.
Furthermore, insufficient or incomplete initiation of the curing reaction in the spray gun known from EP-A 1 002 587 can occur with coating compositions requiring a relatively high dose of actinic radiation for initiation, because irradiation takes place only immediately before or after the coating material leaves the spray gun. This can lead to delayed or incomplete curing of the applied coating. In this case, additional UV irradiation equipment is needed for further irradiation of the applied coating to ensure a fast and complete cure.

The invention now provides a spray gun and a process of the aforementioned type which are not restricted by the above-mentioned drawbacks.
The spray gun of the invention is a spray gun for application of a coating having a spray nozzle and at least one actinic radiation outlet, characterized in that the at least one actinic radiation outlet is positioned externally and the radiation outlet and the spray nozzle are simultaneously directable to a substrate to be coated. This geometry ensures that during operation of the spray gun at least part of the actinic radiation reaches the coated substrate.

The spray gun according to the invention is suitable for all types of actinic radiation-curable coating compositions, even if there is no induction period between the initiation by actinic radiation and the actual onset of the curing reaction, because initiation of the curing reaction occurs during and after film formation and not exclusively right next to the spray nozzle. The balance of flow of the coating material just after application and the drying speed is particularly favourable.
Because the initiation takes place outside of the spray gun after the coating material has left the spray nozzle, blocking of the spray nozzle by irradiated and cured coating material cannot occur with the spray gun according to the invention even when the spraying process is interrupted. Since the surface of the actinic radiation outlet of the spray gun according to the invention is not in direct contact with the actinic radiation-curable coating composition, deposition of cross-linked material on the radiation outlet and the problems associated therewith will not be encountered.
Furthermore, because the irradiation period is not limited to the moment immediately before or after the coating material leaves the spray gun, also coating compositions requiring a relatively high dose of actinic radiation for initiation can be cured completely and without delay. If required, additional irradiation of the coated surface can be carried out with the spray gun according to the invention without spraying of coating material.

A further embodiment of the spray gun according to the invention is characterized in that the angle between the mean propagation direction of the actinic radiation and the mean flow direction of the coating in the nozzle is less than 90 degrees, preferably less than 45 degrees. In this geometry, an increased proportion of actinic radiation reaches the coated substrate during operation of the spray gun.

In a preferred embodiment of the spray gun the at least one actinic radiation outlet and the nozzle are mutually directable to allow overlap between actinic radiation and the spray nozzle spraying zone. By spray nozzle spraying zone is meant the space which is reached by the spray mist during operation of the spray gun. The geometry of this preferred embodiment ensures that during operation of the spray gun the spray mist and the freshly coated substrate are irradiated with actinic radiation.

By actinic radiation is meant electromagnetic radiation capable of initiating a chemical reaction. The wavelength of the actinic radiation used in the spray gun according to the invention can be varied over a wide range. The wavelength suitable for particular cases depends on the coating system which is to be sprayed and cured with the spray gun. Generally, visible light and ultraviolet (UV) radiation have suitable wavelengths. Particularly suitable wavelengths of the actinic radiation are below 600 nm, in particular below 500 nm, and especially below 450 nm. The part of the electromagnetic wavelength spectrum known as UV-A radiation in the wavelength range of about 320 to about 400 nm is a particularly preferred type of actinic radiation. The balance of biological activity and associated health risks on the one hand and capability to initiate chemical reactions on the other is particularly acceptable for UV-A radiation. Accordingly, a preferred embodiment of the spray gun is characterized in that the at least one actinic radiation outlet is a UV-A radiation outlet.
However, actinic radiation with a shorter wavelength, such as 280 nm, 200 nm or even shorter, such as 100 nm or 20 nm, is also suitable. Filters can be used to cut off undesired wavelengths from the actinic radiation. For example, a so-called black light filter can be used to exclude the wavelengths of visible light from the actinic radiation.

Suitable sources of actinic radiation to be used in the spray gun according to the invention are commercially available. As examples fluorescent tubes, deuterium halogen light sources, laser light sources, mercury vapour lamps, mercury-xenon lamps, and metal halide lamps may be mentioned. In addition to lamps which continuously provide actinic radiation, it is also possible to use discontinuous sources of actinic radiation, such as Xenon flash lamps or pulsed lasers. It is preferred that the source of actinic radiation is a source of UV-A radiation. It is also preferred that the actinic radiation source is a point source, such as UV-P 280/2 ex Panacol-Elosol.
Alternatively, the actinic radiation is provided by at least one UV light emitting diode (UV-LED). The use of UV-LEDs in the spray gun of the invention has several advantages. UV-LEDs allow instant on/off switching of the UV radiation source, which adds flexibility to a combined spraying and irradiation process. Furthermore, the service life of UV-LEDs generally is significantly longer than the service life of conventional UV sources, for example up to 50,000 hours for a UV-LED compared to about 1,000 hours for conventional UV lamps. Further, UV-LEDs generally have a narrow wavelength distribution and offer the possibility to customize the peak wavelength. UV-LEDs are characterized by an efficient conversion of electric energy to UV radiation. This causes low heat generation and allows the omission of cooling elements or the use of only small ones, which is beneficial for attachment to a spray gun. Another advantage of UV-LEDs is their relatively low working voltage, which is preferred in a paint spray booth environment compared to the higher voltages needed for normal UV lamps.

A source of actinic radiation such as mentioned above can be mounted on the exterior of the spray gun according to the invention so as to direct the actinic radiation towards the spray mist and the coated substrate. Alternatively, the at least one actinic radiation outlet is connected to an actinic radiation source by a light guide. In this case the source of actinic radiation can be positioned away from the spray gun. Light guides are made of transparent material to guide a flow of light by use of total reflection. It is preferred that the light guide is made of flexible material so as to allow movement of the spray gun relative to the source of actinic radiation. Examples of materials for light guides are plastic, fiber light guides consisting of a number of thin light guide fibers, and liquid light guides.

As mentioned above, the spray gun according to the invention has at least one actinic radiation outlet. However, it is also possible that the spray gun has a plurality of actinic radiation outlets, for example 2, 3, 4, or even more actinic radiation outlets. Individual UV-LEDs as mentioned above are often of a rather small size and emit a comparatively low level of actinic radiation. Consequently, if such UV-LEDs are used as a source of actinic radiation, it is preferred that a plurality of UV-LEDs is grouped together in a so-called UV-LED array. The number of individual UV-LEDs in a UV-LED array can be customized depending on the required size, shape, and actinic radiation output required. A UV-LED array can comprise several hundreds or even thousands of individual UV-LEDs.
The shape of the at least one actinic radiation outlet is not critical. It may be of any suitable shape. As an example, a circular UV-LED array placed around the nozzle of the spray gun may be mentioned.
If the spray gun according to the invention has more than one actinic radiation outlet, these outlets can be arranged such as to direct the actinic radiation emitted there from essentially in the same direction, preferably so that during operation of the spray gun the spray mist and the freshly coated substrate are irradiated with actinic radiation.
Alternatively, at least one actinic radiation outlet can be arranged to direct actinic radiation predominantly towards the spray mist, while at least one other actinic radiation outlet is arranged to direct actinic radiation essentially towards the coated substrate without crossing the spray mist. Thus, the distribution ratio of actinic radiation crossing the spray mist *versus* actinic radiation directly reaching the freshly coated substrate may be varied. The distribution ratio selected for a particular case can be dependent on the coating system to be applied by the spray gun according to the invention. It is thus possible to design the spray gun so as to deliver the major part of the actinic radiation via the spray mist. If desired and/or suitable, it is also possible to reverse the distribution ratio of actinic radiation, so that only a minor part passes the spray mist. The selection of the particular distribution ratio of actinic radiation will depend on several factors, such as the cure speed of the coating material and the layer thickness of the coating to be applied and cured.
Suitable means to adjust the distribution ratio of actinic radiation are the selection of a particular position of the at least one actinic radiation outlet relative to the spray nozzle of the spray gun, the variation of the angle between the mean propagation direction of the actinic radiation emerging from the at least one actinic radiation outlet and the mean flow direction of the coating in the nozzle, and the variation of the number of actinic radiation outlets. It is also possible to introduce suitable lenses and/or reflectors into the actinic radiation beam in order to control the distribution and the propagation direction of actinic radiation. Apertures, which may optionally be adjustable, can also be used to control the amount and the distribution ratio of actinic radiation. Combinations and variations of these embodiments are of course possible.

There are no restrictions with respect to the type of spray gun which can be used according to the invention, as long the spray gun is suitable for spraying coating material. Preferred spray guns are spray guns for liquid coating compositions. Such spray guns are generally known to the skilled person and are described by Klaus Chor in *Lehrbuch für Fahrzeuglackierer,* Audin Verlag, Munich 1999, pp. 124 - 132. Examples of suitable spray guns include hand-held spray guns with gravity feed, suction feed, and pressure feed; high- and low-pressure air spray guns, and airless spray guns; multi-component spray guns, e.g. two-component spray guns; and spray guns for electrostatic spraying. Air spray guns are preferred.

In one particular embodiment, the spray gun according to the invention forms part of an automated coating system, such as a coating robot.
In one embodiment the spray gun has means to start and stop spraying and irradiation with actinic radiation simultaneously, for example by including a switch for the actinic radiation source in the trigger of the spray gun. However, it is also advantageous if the actinic radiation can be started up separately, so as to have the possibility of additional irradiation of the coated substrate after spraying in order to increase the cure speed and/or to ensure complete curing of the coating.

The current invention also relates to a process of applying a coating composition which is at least partly curable by actinic radiation, wherein a spray gun having a spray nozzle and at least one actinic radiation outlet is used, characterized in that the at least one actinic radiation outlet is positioned externally and the outlet and the nozzle are simultaneously directed to a substrate to be coated.
A particular embodiment of the process is characterized in that after application of the coating the freshly applied coating layer is further irradiated with actinic radiation.

The process according to the invention can be carried out with any coating composition which is at least partly curable by actinic radiation. Suitable monomers, oligomers, polymers, and photoinitiators for use in such coating compositions are known to the skilled person and described in, e.g., Kirk-Othmer, *Encyclopedia of Chemical Technology,* 3^{rd} Edition, Volume 19, pp. 607 - 624, and references cited therein.
Examples of actinic radiation-curable coating compositions are free radical-curable compositions based on free radical-polymerizable monomers, oligomers, and polymers. As free radical-polymerizable groups (meth)acrylate groups, allyl groups, and vinyl groups may be mentioned. Another type of actinic radiation-curable coating composition cures by a cationic mechanism, for example by cationic ring opening polymerization or by cationic and/or acid-catalyzed cross-linking mechanisms. In that case the actinic radiation-curable coating composition comprises a photolatent acid. Suitable groups susceptible to cationic ring opening polymerization include cyclic ether groups, such as epoxide groups or oxetane groups. Examples of suitable groups susceptible to cationic and/or acid-catalyzed cross-linking mechanisms are vinyl ether groups or a combination of hydroxyl-containing polymers with melamine oligomers. It is also possible for the coating composition to be only partly cured by actinic radiation and fully cured thermally. In this case, the thermal curing reaction may be the same as or different from the actinic radiation-induced curing reaction. Thus, the coating composition can also comprise groups which are not susceptible to actinic radiation-induced curing.

The spray gun according to the invention can be employed with particular advantage in an embodiment of the above-mentioned process wherein the coating composition comprises a photolatent base and a base-catalyzed polymerizable or curable material. The curing reaction will start with little or no delay after the photolatent base has been transformed to a non-latent base by the action of actinic radiation. The advantages of the spray gun according to the invention over the known spray guns can thus be fully exploited.
Examples of suitable photolatent bases are described in European Patent Application EP-A 0 882 072, in International Patent Application WO 94/28075, and in International Patent Application WO 01/92362.
The photolatent base is preferably selected from a 4-(ortho-nitrophenyl) dihydropyridine, optionally substituted with alkyl ether and/or alkyl ester groups, a quaternary organo-boron photoinitiator, and an α-amino acetophenone. The preferred α-amino acetophenone is a compound according to the following formula (I):

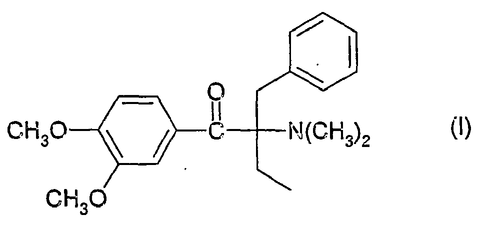

Mixtures comprising Michael donors, such as polyfunctional acetoacetates or malonates, and polyfunctional Michael acceptors, such as acryloyl-functional compounds, are suitable as base-catalyzed curable material.

Such mixtures are described in more detail in the above-mentioned EP-A 0 882 072 and WO 94/28075.
In a preferred embodiment the base-catalyzed curable material comprises at least one polyisocyanate and at least one compound comprising at least one thiol group. Such coating compositions are described in WO 01/92362.

The coating compositions to be used in the process according to the invention can comprise the usual additives and components such as solvents, fillers, leveling agents, emulsifiers, anti-foaming agents and rheology control agents, reducing agents, antioxidants, HALS-stabilizers, UV-stabilizers, water traps such as molecular sieves, and anti-settling agents.
The process is also suitable for pigmented coating compositions. In a preferred embodiment, the coating composition to be used in the process is a clear coat or top coat composition. If the coating composition is a clear coat composition, it is particularly preferred that the clear coat forms a layer in a multi-layer lacquer system, such as a base coat - clear coat system.

The process of the present invention can be applied to coat any substrate. The substrate may be, for example, metal, e.g., iron, steel, and aluminium, plastic, wood, glass, synthetic material, paper, leather, or another coating layer. The other coating layer can be applied according to the process of the current invention or it can be applied via a different process.
The process is suitable for coating objects such as bridges, pipelines, industrial plants or buildings, oil and gas installations, or ships. The process according to the invention is particularly suitable for finishing and refinishing cars and large transportation vehicles, such as trains, trucks, buses, and airplanes.

The invention will be elucidated further with reference to the drawing and to the following examples.

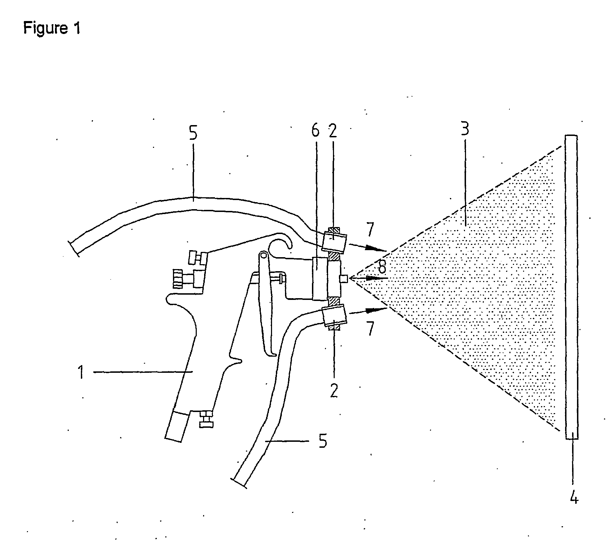

Fig. 1 shows an example of a spray gun (1) according to the invention. Two actinic radiation outlets (2) of two light guides (5) are positioned externally next to the spray nozzle (6). The actinic radiation outlets (2) and the spray nozzle (6) are directed to a substrate to be coated (4). The actinic radiation is directed towards the spray mist (3). The arrows (7) and (8) show the mean propagation direction of the actinic radiation and the mean flow direction of the coating in the nozzle, respectively. The spray gun (1) is a model GTI ex DeVilbiss. The light guides (5) are connected to a UV point source (not shown in Fig. 1).

### Example 1

A photoactivatable coating composition was prepared from the following components, pbw means parts by weight:

| | |
|---|---|
| Pentaerythritol tetrakis (3-mercaptopropionate) | 10.0 |
| | pbw |
| Tolonate® HDT - LV | 17.9 |
| | pbw |
| Solution of Byk® 306, 10% in butyl acetate | 0.6 pbw |
| Solution of α-amino acetophenone of formula (I), 10% in butyl acetate | 1.1 pbw |

| | |
|---|---|
| Tolonate® HDT - LV is a cyclic trimer of hexamethylene diisocyanate ex Rhodia. Byk® 306 is a surface active agent ex Byk Chemie. | |

The pot life of the composition was 6 hours. The photoactivatable coating composition was sprayed as a clear coat with the spray gun according to Fig. 1.
In a first experiment irradiation was carried out only during spraying. The drying time of the coating was approximately 15 minutes.
In a second experiment the freshly sprayed film was irradiated after spraying for the same period of time as during spraying. The drying time of the coating was approximately 3 minutes.

## Claims

1. A spray gun for application of a coating having a spray nozzle and at least one actinic radiation outlet, **characterized in that** the at least one actinic radiation outlet is positioned externally and the radiation outlet and the spray nozzle are simultaneously directable to a substrate to be coated.

2. A spray gun according to claim 1, **characterized in that** the angle between the mean propagation direction of the actinic radiation and the mean flow direction of the coating in the nozzle is less than 90 degrees.

3. A spray gun according to claim 1 or 2, **characterized in that** the angle between the mean propagation direction of the actinic radiation and the mean flow direction of the coating in the nozzle is less than 45 degrees.

4. A spray gun according to any one of the preceding claims, **characterized in that** the at least one actinic radiation outlet and the nozzle are mutually directable to allow overlap between the actinic radiation and the spray nozzle spraying zone.

5. A spray gun according to any one of the preceding claims, **characterized in that** the spray gun is an air spray gun.

6. A spray gun according to any one of the preceding claims, **characterized in that** the spray gun forms part of an automated coating system.

7. A spray gun according to any one of the preceding claims, **characterized in that** the at least one actinic radiation outlet is a UV-A radiation outlet.

8. A spray gun according to any one of the preceding claims, **characterized in that** the actinic radiation is provided by a point source.

9. A spray gun according to any one of the preceding claims, **characterized in that** the at least one actinic radiation outlet is connected to an actinic radiation source by a light guide.

10. A spray gun according to any one of the preceding claims, **characterized in that** the actinic radiation is provided by at least one UV light emitting diode (UV-LED).

11. A spray gun according to claim 10, **characterized in that** a multitude of UV-LEDs is grouped together in a UV-LED array.

12. A process of applying a coating composition which is at least partly curable by actinic radiation, **characterized in that** a spray gun according to any one of the preceding claims is used.

13. A process according to claim 12, **characterized in that** after application of the coating the freshly applied coating layer is further irradiated with actinic radiation.

14. A process according to claim 12 or 13, **characterized in that** as the coating composition which is at least partly curable by actinic radiation a composition comprising a photolatent base and a base-catalyzed polymerizable or curable material is used.

15. A process according to claim 14, **characterized in that** the photolatent base is selected from a 4-(ortho-nitrophenyl) dihydropyridine, optionally substituted with alkyl ether and/or alkyl ester groups, a quaternary organo-boron photoinitiator, and an α-amino acetophenone.

16. A process according to claim 15, **characterized in that** the α-amino acetophenone is of the formula (I)

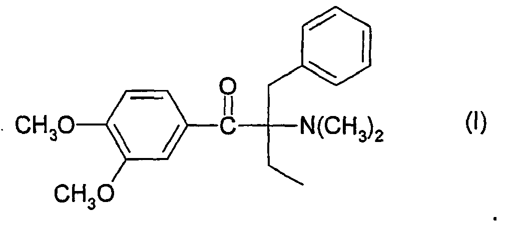

17. A process according to any one of preceding claims 14 - 16, **characterized in that** a base-catalyzed curable material comprising at least one polyisocyanate and at least one compound comprising at least one thiol group is used.

18. A process according to any one of preceding claims 12 - 17, **characterized in that** the coating composition which is at least partly curable by actinic radiation is a clear coat or top coat composition.

19. A process according to claim 18, **characterized in that** the clear coat forms a layer in a multi-layer lacquer system.

20. A process according to any one of preceding claims 12 - 19, **characterized in that** it is applied for finishing or refinishing of cars or large transportation vehicles.

## Patentansprüche

1. Spritzpistole zum Auftragen einer Beschichtung mit einer Sprühdüse und wenigstens einem Ausgang für aktinische Strahlung, **dadurch gekennzeichnet, dass** der wenigstens eine Ausgang für aktinische Strahlung außen positioniert ist und der Strahlungsausgang und die Sprühdüse gleichzeitig auf ein zu beschichtendes Substrat richtbar sind.

2. Spritzpistole nach Anspruch 1, **dadurch gekennzeichnet, dass** der Winkel zwischen der Hauptausbreitungsrichtung der aktinischen Strahlung und der Hauptfließrichtung der Beschichtung in der Düse weniger als 90° beträgt.

3. Spritzpistole nach Anspruch 1 oder 2, **dadurch gekennzeichnet, dass** der Winkel zwischen der Hauptausbreitungsrichtung der aktinischen Strahlung und der Hauptfließrichtung der Beschichtung in der Düse weniger als 45° beträgt.

4. Spritzpistole nach einem der vorhergehenden Ansprüche, **dadurch gekennzeichnet, dass** der wenigstens eine Strahlungsausgang und die Düse gemeinsam ausrichtbar sind, um eine Überlappung zwischen der aktinischen Strahlung und der Sprühzone der Sprühdüse zu ermöglichen.

5. Spritzpistole nach einem der vorhergehenden Ansprüche, **dadurch gekennzeichnet, dass** die Spritzpistole eine Druckluft-Spritzpistole ist.

6. Spritzpistole nach einem der vorhergehenden Ansprüche, **dadurch gekennzeichnet, dass** die Spritzpistole einen Teil eines automatisierten Beschichtungssystems bildet.

7. Spritzpistole nach einem der vorhergehenden Ansprüche, **dadurch gekennzeichnet, dass** wenigstens ein Ausgang für aktinische Strahlung ein Ausgang für UV-A-Strahlung ist.

8. Spritzpistole nach einem der vorhergehenden Ansprüche, **dadurch gekennzeichnet, dass** die aktinische Strahlung von einer Punktquelle erzeugt wird.

9. Spritzpistole nach einem der vorhergehenden Ansprüche, **dadurch gekennzeichnet, dass** wenigstens ein Ausgang für aktinische Strahlung mittels eines Lichtleiters an eine Quelle für aktinische Strahlung angeschlossen ist.

10. Spritzpistole nach einem der vorhergehenden Ansprüche, **dadurch gekennzeichnet, dass** die aktinische Strahlung von wenigstens einer UV-Licht emittierenden Diode (UV-LED) erzeugt wird.

11. Spritzpistole nach Anspruch 10, **dadurch gekennzeichnet, dass** eine Mehrzahl von UV-LED in einem UV-LED-Array zusammen gruppiert ist.

12. Verfahren zum Auftragen einer Beschichtung, die wenigstens teilweise durch aktinische Strahlung härtbar ist, **dadurch gekennzeichnet, dass** eine Spritzpistole nach einem der vorhergehenden Ansprüche verwendet wird.

13. Verfahren nach Anspruch 12, **dadurch gekennzeichnet, dass** nach dem Auftragen der Beschichtung die frisch aufgetragene Beschichtungsschicht weiter mit aktinischer Strahlung bestrahlt wird.

14. Verfahren nach Anspruch 12 oder 13, **dadurch gekennzeichnet, dass** als Beschichtungszusammensetzung, die wenigstens teilweise mit aktinischer Strahlung härtbar ist, eine Zusammensetzung verwendet wird, die eine photolatente Base und ein basenkatalysiert polymerisierbares oder härtbares Material umfasst.

15. Verfahren nach Anspruch 14, **dadurch gekennzeichnet, dass** die photolatente Base aus einem 4-(ortho-Nitrophenyl)dihydropyridin, das gegebenenfalls durch Alkylether- und/oder Alkylestergruppen substituiert ist, einem quaternären Organobor-Photoinitiator und einem α-Aminoacetophenon ausgewählt ist.

16. Verfahren nach Anspruch 15, **dadurch gekennzeichnet, dass** das α-Aminoacetophenon die Formel (I) 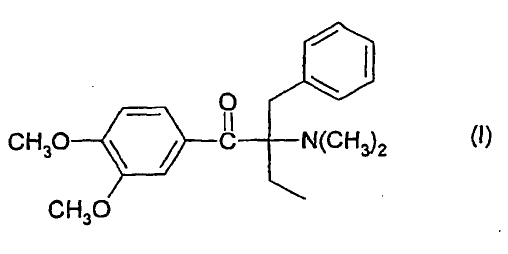 hat.

17. Verfahren nach einem der vorhergehenden Ansprüche 14 - 16, **dadurch gekennzeichnet, dass** ein basenkatalysiert härtbares Material, das wenigstens ein Polyisocyanat umfasst, und wenigstens eine Verbindung, die wenigstens eine Thiolgruppe umfasst, verwendet wird.

18. Verfahren nach einem der vorhergehenden Ansprüche 12 - 17, **dadurch gekennzeichnet, dass** die Beschichtungszusammensetzung, die wenigstens teilweise mit aktinischer Strahlung härtbar ist, eine Klarlack- oder eine Decklack-Zusammensetzung ist.

19. Verfahren nach Anspruch 18, **dadurch gekennzeichnet, dass** der Klarlack eine Schicht in einem mehrschichtigen Lacksystem bildet.

20. Verfahren nach einem der vorhergehenden Ansprüche 12 - 19, **dadurch gekennzeichnet, dass** es zur Lackierung oder Reparaturlackierung von Automobilen oder großen Transportfahrzeugen angewandt wird.

## Revendications

1. Pistolet de pulvérisation pour l'application d'un revêtement, ayant une buse de pulvérisation et au moins une sortie de rayonnement actinique, **caractérisé en ce que** l'au moins une sortie de rayonnement actinique est positionnée en externe, et la sortie de rayonnement et la buse de pulvérisation peuvent être dirigées simultanément vers un substrat devant être revêtu.

2. Pistolet de pulvérisation selon la revendication 1, **caractérisé en ce que** l'angle entre la direction de propagation moyenne du rayonnement actinique et la direction d'écoulement moyenne du revêtement dans la buse est inférieur à 90 degrés.

3. Pistolet de pulvérisation selon la revendication 1 ou 2, **caractérisé en ce que** l'angle entre la direction de propagation moyenne du rayonnement actinique et la direction d'écoulement moyenne du revêtement dans la buse est inférieur à 45 degrés.

4. Pistolet de pulvérisation selon l'une quelconque des revendications précédentes, **caractérisé en ce que** l'au moins une sortie de rayonnement actinique et la buse peuvent être mutuellement dirigées pour permettre un chevauchement entre le rayonnement actinique et la zone de pulvérisation de la buse de pulvérisation.

5. Pistolet de pulvérisation selon l'une quelconque des revendications précédentes, **caractérisé en ce que** le pistolet de pulvérisation est un pistolet de pulvérisation pneumatique.

6. Pistolet de pulvérisation selon l'une quelconque des revendications précédentes, **caractérisé en ce que** le pistolet de pulvérisation forme une partie d'un système de revêtement automatisé.

7. Pistolet de pulvérisation selon l'une quelconque des revendications précédentes, **caractérisé en ce que** l'au moins une sortie de rayonnement actinique est une sortie de rayonnement UV-A.

8. Pistolet de pulvérisation selon l'une quelconque des revendications précédentes, **caractérisé en ce que** le rayonnement actinique est fourni par une source ponctuelle.

9. Pistolet de pulvérisation selon l'une quelconque des revendications précédentes, **caractérisé en ce** l'au moins une sortie de rayonnement actinique est connectée à une source de rayonnement actinique par un guide de lumière.

10. Pistolet de pulvérisation selon l'une quelconque des revendications précédentes, **caractérisé en ce que** le rayonnement actinique est fourni par au moins une diode émettant une lumière UV (UV-LED).

11. Pistolet de pulvérisation selon la revendication 10, **caractérisé en ce qu'**une multitude d'UV-LED sont groupées ensemble en un agencement d'UV-LED.

12. Procédé pour appliquer une composition de revêtement qui est au moins partiellement durcissable par un rayonnement actinique, **caractérisé en ce qu'**on utilise un pistolet de pulvérisation selon l'une quelconque des revendications précédentes.

13. Procédé selon la revendication 12, **caractérisé en ce qu'**après application du revêtement, la couche de revêtement fraîchement appliquée est encore irradiée avec un rayonnement actinique.

14. Procédé selon la revendication 12 ou 13, **caractérisé en ce qu'**en tant que composition de revêtement qui est au moins partiellement durcissable par un rayonnement actinique, on utilise une composition comprenant une base photo-latente et un matériau durcissable ou polymérisable catalysé avec une base.

15. Procédé selon la revendication 14, **caractérisé en ce que** la base photo-latente est choisie parmi une 4-(orthonitrophényl)dihydropyridine, éventuellement substituée par des groupes éther alkylique et/ou ester alkylique, un photo-amorceur organique quaternaire du bore, et une α-amino-acétophénone.

16. Procédé selon la revendication 15, **caractérisé en ce que** l'α-amino-acétophénone répond à la formule (I) :

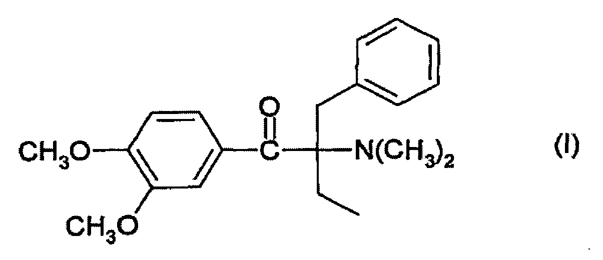

17. Procédé selon l'une quelconque des revendications précédentes 14 à 16, **caractérisé en ce qu'**on utilise un matériau durcissable catalysé avec une base comprenant au moins un polyisocyanate et au moins un composé comprenant au moins un groupe thiol.

18. Procédé selon l'une quelconque des revendications précédentes 12 à 17, **caractérisé en ce que** la composition de revêtement qui est au moins partiellement durcissable par un rayonnement actinique est une composition de revêtement transparente ou de revêtement de finition.

19. Procédé selon la revendication 18, **caractérisé en ce que** le revêtement transparent forme une couche d'un système de laque à couches multiples.

20. Procédé selon l'une quelconque des revendications précédentes 12 à 19, **caractérisé en ce qu'**il est appliqué pour le vernissage ou le revernissage de voitures ou de gros véhicules de transport.
